(19) Europäisches Patentamt
European Patent Office
Office européen des brevets

(11) Publication number: **0 388 572 A1**

(12) # EUROPEAN PATENT APPLICATION

(21) Application number: 89710019.4

(22) Date of filing: 23.03.89

(51) Int. Cl.5: A23L 1/308, A23L 1/0522, A23L 1/0534, A23L 1/24, A23D 7/00, A23D 9/00, A23C 9/152, A23C 19/09, A23C 15/12, A23C 13/12, A23G 9/02, //C08B3/10, C08B33/02

(43) Date of publication of application: 26.09.90 Bulletin 90/39

(84) Designated Contracting States: AT BE CH DE ES FR GB GR IT LI LU NL SE

(71) Applicant: SERES LABORATORIES, INC.
3331 Industrial Drive
Santa Rosa California 95401(US)

(72) Inventor: Stearns, Jay F.
3820 Sumner Lane, 10
Santa Rosa California 95405(US)
Inventor: Jennings, Rex A.
3005 Maryana, Apt. 1
Salmon Creek California 94923(US)

(74) Representative: Vogel, Georg
Pat.-Ing. Georg Vogel
Hermann-Essig-Strasse 35
D-7141 Schwieberdingen(DE)

(54) **Low calorie edible fat and oil substitutes.**

(57) A composite particle capable of being used as a substitute for edible fats. The particle comprises a solid core material having a particle size between approximately 0.1 to 20μ. The surface of the particle is sufficiently reactive to form covalent bonds with a shell component. The core and shell as a composite are hydrophobic in nature and are indigestible by humans.

EP 0 388 572 A1

# LOW CALORIE EDIBLE FAT AND OIL SUBSTITUTES

## Technical Field of the Invention

The present invention deals with composite particles capable of being employed to displace edible fats normally found in commonly consumed food products. In that the human digestive tract is incapable of breaking down and assimilating the composite particles, they are caused to pass through the human body and thus represent a dietary aid.

## Background of the Invention

It has long been recognized that the diets of most Americans contain an inordinate quantity of fats, resulting in critically high levels of cholesterol and low-density lipoproteins. One of the most common metabolic problems among people today is obesity. This condition is simply due to a greater intake of calories than are expended. Fat is the most concentrated form of energy in the diet, with each gram of fat supplying over twice the calories of a gram of protein or carbohydrate. Overall, fat constitutes about 40% of the total calories of the diet. If available calories of a fat could be lowered without a decrease in the amount eaten, this would offer a very convenient and practical method by which obesity could be prevented or overcome. One of the methods by which caloric value of edible fat could be lowered would be to decrease the amount of triglyceride that is absorbed in the human system since the usual edible triglyceride fats are almost completely absorbed. Such a method is taught by U.S. Patent No. 3,600,186, which teaches the use of a sugar or sugar alcohol fatty acid ester containing at least four fatty acid ester groups. It is taught that sugar or sugar alcohol fatty acid ester compounds that contain three or less fatty acid ester groups are digested in the intestinal tract much in the manner as ordinary triglyceride fats, but the invention teaches that four or more fatty acid ester groups are digested to a lesser extent and thus have the desired low-calorie properties of a fat substitute. However, the invention taught in U.S. Patent No. 3,600,186 was not without its difficulties. Most notably, sucrose polyesters, because they are non-absorbable oils, tend to lubricate the lower intestine causing diarrhea. Furthermore, they tend to dissolve and remove oil soluble vitamins from the body thus causing vitamin deficiencies.

It has also been recognized that the absorbability of triglyceride fat could be decreased by altering either the alcohol or the fatty acid portion of the molecule. For example, erucic acid and stearic acid have been demonstrated as decreasing the absorbability of triglyceride fats. U.S. Patent No. 2,962,419 disclosed decreasing the absorbability by altering the alcohol moiety of edible fat compounds, teaching that fatty acid esters which contain a neopentyl nucleus are not digested like normal fats, and thus can be used as a fat substitute in food compositions.

The prior art has recognized that a significant problem to overcome in attempting to formulate fat substitutes is to maintain the desirable and conventional physical properties of edible fat. Thus, to be a practical low calorie fat, the compound must resemble conventional triglyceride fat and have the same utility in various fat-containing food compositions. However, none of the prior art has been able to accomplish this goal without significant side effects such as decreased absorption of oil soluble vitamins and the tendency to cause diarrhea.

It is thus an object of the present invention to provide a fat substitute having a solid core which cannot dissolve oil soluble vitamins.

It is a further object of the present invention to provide a fat substitute having a relatively large solid core structure which would not have a tendency to act as an oil in the human digestive tract and thus not generally tend to promote diarrhea.

These and further objects will be more readily apparent when reviewing the following disclosure.

## Summary of the Invention

The present invention deals with both a composite particle for use as a substitute for edible fats and edible food products which embody such composite particles. The particles themselves comprise a solid core material having a particle size between approximately 0.1 to 20μ. The solid core material is further characterized as being a naturally-occurring polysaccharide. Each member possesses surface hydroxyl groups for forming covalent bonds with shell components. The shell components being covalently bonded

to the surface of the solid core material are of the general formula
-X′-Y-Z
wherein X′ is derived from any functional group, X, capable of reacting with hydroxyls found on the surfaces of the solid core material to form covalent bonds, and
Y and Z together form any group which enables the composite particle to be hydrophobic.

The foods of the present invention are any of a number of staple food products in which triglycerides can be substituted by the composite particles recited above. Examples, without limitations, include such foods as butter, oil, salad dressing, ice cream, milk, cheese, cream, margarine, mayonnaise and shortening.

## Detailed Description of the Invention

The composite particles of the present invention can generally be described as comprising two basic component parts--namely, the core which is solid, having a particle size of approximately 0.1 to 20μ and having hydroxyl groups on its surface, and one or more shell components which react with the surface hydroxyls of the core material, forming covalent bonds which are not generally capable of being broken by enzymes found in the human digestive tract, and which render the core material substantially hydrophobic and "oily."

The core material preferably consists of one or more naturally-occurring polysaccharides. Such materials include Avicel® which is a microcrystalline cellulose available from FMC Corporation, Solka Floc® which is a cellulose pulp available from Brown Co. of New York, New York, colloidal cellulose, starch, flour, and inulin. Naturally-occurring polysaccharides represent an ideal core material, for they possess surface hydroxyl groups which are capable of entering into an esterification reaction resulting in the formation of stable covalent bonds quite resistant to attack by enzymes found in the human digestive tract.

In preparing the composite particles, one should attempt to form a covalent bond between the core and shell materials which would be substantially stable to cooking heat and to enzymes found in the human digestive tract. The rationale underlying this concept is that the composite particles would be too hindered to be substrates for digestive lipases. It is further noted that even if the various esters suffer enzymatic cleavage, the amount of digestible fat released would be negligible, noting that the weight ratio of stearate, a typical shell material, to cellulose, a typical core material, would be approximately 1/100 to 5/100. Furthermore, some core materials contemplated for use herein, such as cellulose particles, will not break up in the digestive system, so that the laxative effect of such material should be more like that of a dietary fiber rather than that of an indigestible oil, which was the effect noted in using sucrose core material as disclosed in U.S. Patent No. 3,600,186.

As previously noted, the shell component consists of a material having the general formula:
-X′-Y-Z
where X′ is derived from any functional group, X, capable of reacting with the hydroxyl groups of naturally-occurring polysaccharides. Thus, X could conveniently be an acid chloride which would form an ester, X′, with such hydroxyl groups:

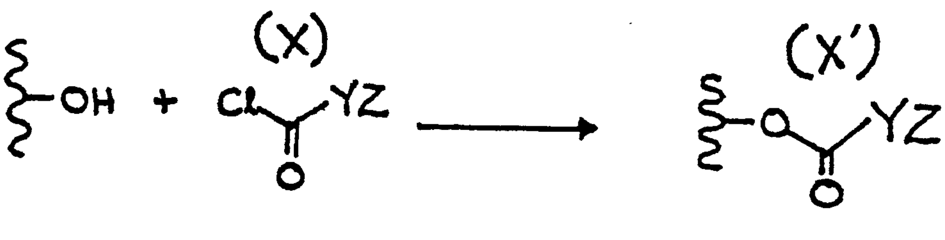

Alternatively, the same shell material could be attached to the surface hydroxyls of the core material by acid or base catalyzed transesterification or by acyl-activating means other than acid chlorides, said means being well known to those skilled in the art.

Instead of acylating the hydroxyls, the core surfaces could also be alkylated by several means where X could be, for example, a primary halide, a terminal epoxide or an acrylic ester:

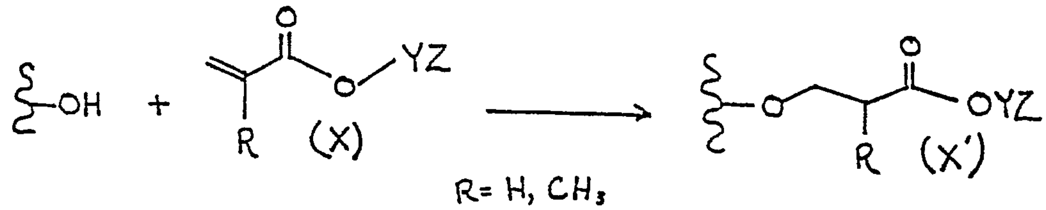


The Y group is a linear or branched hydrocarbon chain of one to 30 methylene groups and zero to five double bonds. It should be noted that if Z is a methyl group and Y is omitted, the resulting composite particle does not have the desired hydrophobic properties. Thus, for the practice of this invention, a shell comprised of propionyl groups will work whereas a shell of acetyl groups will not.

In its simplest form, Z could be itself a methyl group. This terminal group could also be an ester moiety or multiple ester groups on an appendage derived from glycerin or propylene glycol such as:

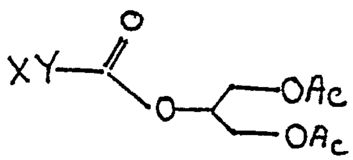 ; 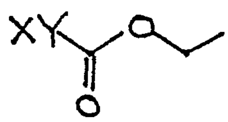 ; 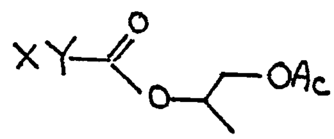

Alternatively, the Z group could be a reverse ester or esters, that is one or more acylated hydroxyl groups such as:

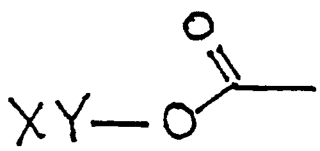 ; 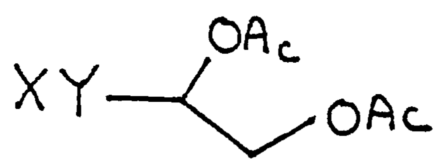

One could then combine the terminal ester and terminal reverse ester into a single molecule in the form of a lactone such as:

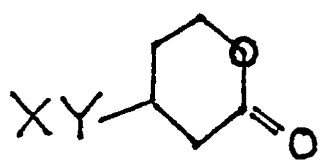

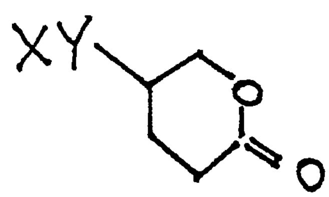

Another example of the possibilities for Z would be to incorporate a phosphate ester or phosphatidyl choline moiety, such as:

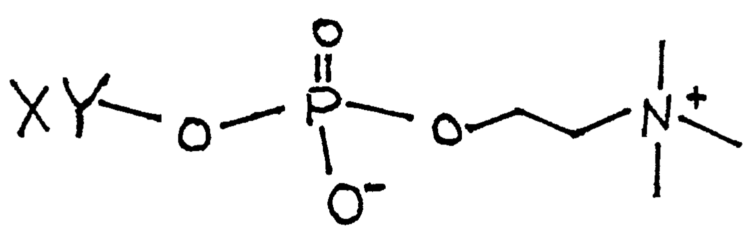

Numerous methodologies can be envisioned for the construction of the shell components depicted in the above examples by anyone well practiced in the art. Of course, the particular strategy employed for the

construction of any given Z group will be dependent on the exact nature of X and Y.

The selection of the appropriate Z group will depend in large measure upon the intended medium in which the composite particle of the present invention is intended to reside. For example, the fat globules in dairy products typically have polar compounds such as proteins and phospholipids as major constituents of their surface membranes.

Thus, in order to most closely mimic the natural fat particles present in this medium, the synthetic composite particles should have a Z group with chemical and physical properties similar to the fat globules' surface membranes. Although the exact nature of the bonding in these membranes is not known, it can be readily surmised due to the presence of the zwitterionic phospholipids, proteins and hydration layers, that hydrogen bonding plays a major role. To this end, the preferred Z groups may contain one or more esters or the phosphatidyl choline residue. Since the membrane composition is highly variable from one lot of milk to another and even between globules in the same lot of milk, a variety of Z groups may be necessary to mimic fat particles even among differing dairy products.

In addition, one can fine-tune this mimicry by incorporating more than one Z group in the same composite particle. For instance, the highly polar zwitterionic phosphatidyl choline residue probably should be used as a minor Z component in conjunction with a methyl or a non-ionic ester-type Z component. Thus two shell components, X-Y-Za and X-Y-Zb could be mixed in varying proportions prior to reaction with core particles to give a broad spectrum of physical properties.

A final consideration in selecting a Z group stems from the fact that a Y group of 12 or more methylenes will permit lipases to bind Z group esters. Lipase cleavage of Z group esters could be useful if the resulting Y terminal is more polar than before cleavage. Such an increase in polarity would make the resulting particle less like an oil, thus further decreasing the likelihood of diarrhea.

Example I

A five-liter, three neck round bottom flask is fitted with a mechanical stirrer, a one-foot packed distilling column, a distilling head/condenser and a heating mantle. The flask is charged with 300 grams of cellulose pulp which has been ground to an average particle size of 500 nanometers. Approximately 3.5 liters of reagent-grade toluene is added. One liter of toluene is distilled over a three hour period with stirring to remove adsorbed water. Approximately 37.5 mL of stearoyl chloride is added with stirring, followed by approximately 18 mL of anhydrous pyridine. The distilling column is replaced by a reflux column with a drying tube and the mixture stirred at reflux for two hours. After cooling and filtration, the product is washed once with 2.5 liters of acetone and twice with 500 mL of ethyl acetate and three times with 1 liter of methanol.

Example II

Approximately 65 grams of the composite particle prepared in Example I is added to approximately 326 mL of milk having a 3.8% fat content and approximately 174 mL of cream having a 36% fat content with an electric beater. Separately, two eggs are beaten with a cup of sucrose and two tablespoons of vanilla. All materials are then combined and cooked for three minutes in a microwave oven and subsequently cooled to room temperature by beating into the mixture small amounts of liquid nitrogen. The mixture is then charged in an ice cream maker and frozen to make a vanilla ice cream. Upon visual inspection, the ice cream is normal in appearance and consistency, while possessing a fat content of about 8% and a composite particle content of approximately 7%.

Example III

A microcrystalline cellulose powder is ground to an average particle size of approximately 2 microns and then suspended in toluene by magnetic stirring. The suspension is heated to boiling and refluxed through a Dean-Stark trap to remove water adsorbed on the cellulose. A large excess (based on calculated surface hydroxyls) of stearoyl chloride is then added at room temperature followed by a slight excess of dry pyridine. The mixture is stirred at reflux for three hours followed by filtration and washing of the modified cellulose with acetone, methanol and ethyl acetate. The weight after vacuum drying indicated that the product was about 41% stearate.

Example IV

A one liter three-necked round bottom flask equipped with a magnetic stirrer, a one foot packed distilling column, a distilling head/condenser, and a heating mantle is charged with 50 g of cellulose pulp (0.5 micron particle size and a 5% water content) and 600 mL of toluene. Over a period of two hours, 250 mL of toluene is distilled with stirring. The distilling column is then replaced by a reflux condenser with a drying tube, and 6.4 mL of propionyl chloride and 11.9 mL of pyridine are added. The mixture is stirred at reflux for 1.5 hours, cooled and filtered. The product is washed successively with 500 mL ethyl acetate, 500 mL acetone, 500 mL 33% aqueous ethanol, 500 mL 67% ethanol and 500 mL of absolute ethanol. After vacuum drying, 50.0 g of white powder is obtained indicating a 5% fat content.

Example V

A one liter three-necked round bottom flask equipped with a magnetic stirrer, a one foot packed distilling column, a distilling head/condenser, and a heating mantle is charged with 50 g of cornstarch or flour and 600 mL of toluene. Over a period of two hours, 250 mL of toluene is distilled with stirring. The distilling column is then replaced by a reflux condenser with a drying tube, and 6.2 mL of stearoyl chloride and 3.0 mL of pyridine are added. The mixture is stirred at reflux for 1.5 to 2 hours, cooled and filtered. The product is washed successively with 500 mL ethyl acetate, 500 mL of 33% aqueous ethanol, 500 mL of 67% ethanol and 500 mL of absolute ethanol and is finally vacuum dried.

**Claims**

1. A composite particle for use as a substitute for edible fats comprising a solid core material having a particle size between approximately 0.1 to 20.0μ and being characterized as naturally-occurring polysaccharides wherein the core material possesses surface hydroxyl groups for forming covalent bonds with shell components and shell components being covalently bonded to the surfaces of said solid core material, said shell components being of the general formula
$-X'-Y-Z$
wherein X′ is derived from any functional group, X, capable of reacting with hydroxyl groups found on the surfaces of the solid core material to form covalent bonds, and
Y and Z together form any group which enables the composite particle to be hydrophobic.

2. The composite particle of claim 1 wherein said naturally-occurring polysaccharides are one or more members selected from the group consisting of microcrystalline cellulose, cellulose pulp, colloidal cellulose, starch, flour and inulin.

3. The composite particles of claim 1 wherein the X component is an acid chloride which covalently bonds to the surfaces of said core materials by an esterification reaction.

4. The composite particles of claim 1 wherein the Y component is a linear or branched hydrocarbon group having approximately one to 30 methylene groups and zero to five double bonds.

5. The composite particles of claim 1 wherein the Z component contains one or more ester moieties.

6. The composite particles of claim 1 wherein the Z component contains a phosphatidyl choline residue.

7. An edible food product comprising one or more staple food products having dispersed therein a composite particle comprising a solid core material having a particle size between approximately 0.1 to 20.0μ and being characterized as naturally-occurring polysaccharides wherein each core material possesses surface hydroxyl groups for forming covalent bonds with shell components and shell components being covalently bonded to the surfaces of said solid core material, said shell components being of the general formula
$-X'-Y-Z$
wherein X′ is derived from any functional group, X, capable of reacting with hydroxyl groups found on the surfaces of the solid core material to form covalent bonds, and
Y and Z together form any group which enables the composite particle to be hydrophobic.

8. The edible food product of claim 7 wherein said naturally-occurring polysaccharides are one or more members selected from the group consisting of microcrystalline cellulose, cellulose pulp, colloidal cellulose, starch, flour and inulin.

9. The edible food product of claim 7 wherein the X component is an acid chloride which covalently bonds to the surfaces of said core materials by an esterification reaction.

10. The edible food product of claim 7 wherein the Y component is a linear or branched hydrocarbon group having approximately one to 30 methylene groups and zero to five double bonds.

11. The edible food product of claim 7 wherein the Z component contains one or more ester moieties.

12. The edible food product of claim 7 wherein the Z component contains a phosphatidyl choline moiety.

13. The edible food product of claim 7 wherein said staple food product is a member selected from the group consisting of butter, oil, salad dressing, ice cream, milk, cheese, cream, margarine, mayonnaise and shortening.

14. The edible food product of claim 7 wherein the covalent bond is substantially stable to enzymes found in the human digestive tract.

European Patent Office

# PARTIAL EUROPEAN SEARCH REPORT

which under Rule 45 of the European Patent Convention shall be considered, for the purposes of subsequent proceedings, as the European search report

Application number
EP 89 71 0019

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-C- 93 355 (ROOTRY) | | A 23 L 1/308<br>A 23 L 1/0522<br>A 23 L 1/0534<br>A 23 L 1/24<br>A 23 D 7/00<br>A 23 D 9/00<br>A 23 C 9/152<br>A 23 C 19/019<br>A 23 C 15/12<br>A 23 C 13/12<br>A 23 G 9/02<br>C 08 B 3/10<br>C 08 B 33/02 |
| | * Claims 1-3; column 1, lines 1-28; column 3, lines 56-59; column 5, line 65 - column 6, line 26 * | 1-5 | |
| Y | | 7 | |
| | -- | | |
| Y | FOOD CHEMICALS CODEX, 1981, 3rd ed., pages 79, 126-129, National Academy Press, Washington, DC,US | | |
| | * Page 79 * | 7 | |
| X | * Pages 127-129 * | 1-5 | |
| | -- | | |
| X | GB-A-1 423 608 (CHINOIN) | | |
| | * Claims 1,4; page 1, line 92 - page 2, line 11 * | 1-4 | TECHNICAL FIELDS SEARCHED (Int. Cl.4) |
| | -- | | |
| X | US-A-3 539 551 (LLOYD) | | A 23 L |
| | ./. | | |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely:

Claims searched incompletely:

Claims not searched:

Reason for the limitation of the search:

A composite particle is claimed, the core of which is a naturally occurring polysaccharide bearing a covalently bonded core defined by a "Markush" formula not precise enough.
The claim is substantiated in the description by example belonging to the single family of fatty acid esters (propionic and stearic acid esters of cellulose or starch)
Besides microcrystalline is not naturally occurring

| Place of search | Date of completion of the search | Examiner |
|---|---|---|
| The Hague | 28-11-1989 | VAN MOER |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1505.1 03.82

European Patent Office

# PARTIAL EUROPEAN SEARCH REPORT

Application number EP 89 71 0019



| DOCUMENTS CONSIDERED TO BE RELEVANT | | | CLASSIFICATION OF THE APPLICATION (Int. Cl.4) |
|---|---|---|---|
| Category | Citation of document with indication, where appropriate, of relevant passages | Relevant to claim | |
| | * Claims 1-20; column 3, line 65 - column 4, line 24; column 1, lines 37-44 * -- | 1-6 | |
| X | EP-A-0 109 776 (A.E. STALEY) * Claims 1,2 * -- | 1-4 | |
| X | FR-A-2 205 533 (CPC) * Claims 1-5; page 3, lines 12-16, 32-34 * -- | 1-5 | |
| A | CH-A- 401 657 (FMC) * Claims; page 3, lines 1-27 * -- | 1-7 | TECHNICAL FIELDS SEARCHED (Int Cl.4) |
| X | US-A-2 223 558 (EPSTEIN) * Claim 1; page 1, line 9 * | 1-5 | |

---------